# EUROPEAN PATENT APPLICATION

(11) **EP 4 434 726 A1**
(43) Date of publication of application: **25.09.2024**
(21) Application number: 24164240.4
(22) Date of filing: 18.03.2024
(51) Int. Cl.: B29C 57/04, B29B 13/02, B29D 23/00, B29L 23/00

(54) **APPARATUS AND METHOD FOR MAKING A BELL JOINT**

(30) Priority: 20.03.2023 IT 202300005235
(71) Applicant: IPM S.R.L., 48022 Lugo (Ravenna) (IT)
(72) Inventor: ARGNANI, Claudio, 48010 Fusignano (RA) (IT)
(74) Representative: Cicconetti, Andrea

(57) **Abstract**

A forming apparatus (1) for making a bell joint (60) on a pipe (50) made of plastic material comprises a mandrel (2) provided with a front portion (4), a rear portion (5) and a plurality of forming sectors (3) expandable to an extended position (E) in order to form an annular seat (62) on a side wall (61) of the pipe (50), wherein the front portion (4) and the rear portion (5) are movable relative to each other between a first configuration (C), in which they are mutually spaced apart, and a second configuration (D), in which the front portion (4) is retracted adjacent to the rear portion (5) and abuts the forming sectors (3) in order to compress and push the pipe (50) against the forming sectors (3), the apparatus further comprising a compression flange (6) for pushing the pipe (50) against the sectors (3).

## Description

The invention relates to apparatuses and methods for making bell joints on ends of pipes made of plastic material. In particular, the invention refers to a forming apparatus and method for making bell joints on ends of plastic pipes by hot plastic deformation.

In the plastic piping field, the type of connection which includes the junction between two successive pipes by means of so called "bell" sleeves or joints is widespread. Bell joint refers to the portion of the pipe end, so called "female" end, which has an enlargement of the cross section (external and internal diameters) such as to form a sort of enlarged tubular sleeve capable of receiving and coupling with the so called "male" end, normal and not enlarged, of the successive pipe. An annular groove is generally made inside the joint which is intended to form an annular seat capable of housing a gasket which ensures the wet seal, once the connection between the two pipes of the piping has been made. The gasket can be a shaped gasket provided with a sealing lip or a ring gasket with a circular section of the "O-ring" type.

Bell joints are typically made directly on the end of the pipe by hot plastic deformation of the said end (belling process) by means of appropriate forming apparatuses.

Forming apparatuses are known which comprise a metal mandrel or expander configured to be inserted by force in the axial or longitudinal direction inside the pipe so as to make the bell joint by plastic deformation. The mandrel is provided with a plurality of forming inserts or sectors that are radially outwardly expandable so as to form the annular groove which acts as a seat for a sealing gasket.

After the groove is formed, the forming sectors are moved radially inwards to allow the disengagement of the mandrel from the joint in the axial direction. External moulds can be provided to enclose the end of the pipe and exert a suitable external compression on the bell joint so as to form an external surface thereof in cooperation with the internal mandrel.

Alternatively, the end of the pipe can be enclosed within a casing in which pressurized fluid is introduced that is adapted to exert a compression from the outside on the bell joint for its formation in cooperation with the internal mandrel.

Other known forming apparatuses comprise, as an alternative to the mandrel, in addition to the external moulds or the casing with pressurized fluid, a blowing system capable of introducing air into the pipe at a pressure such as to deform the plastic material and push the side wall of the pipe against the external moulds so as to form the bell joint.

A disadvantage of such known forming apparatuses is that they do not allow to obtain a precise and accurate geometry of the internal walls of the bell joint, in particular of the annular seat of the gasket. More precisely, such apparatuses do not allow the seat of the gasket to be formed in a precise and calibrated manner, which is generally characterized by small dimensions and fillets (small curvature radii).

During the forming of the bell joint, the plastic material of the pipe wall, due to its thinning and its elongation or stretching in the axial (longitudinal) direction, fails, in fact, to adhere completely and optimally to the forming surfaces of the forming sectors of the mandrel and/or of the external moulds.

In the case of annular seats with a substantially rectangular or trapezoidal section, the hot forming with known apparatuses does not allow to obtain sharp edges inside the seat, i.e., edges having small curvature radii. On the contrary, annular grooves are obtained with fillets or curvature radii of the edges having high value which facilitate the exit from the seat, or in any case a more or less notable displacement, of the annular gasket during the use of the pipe, hat is typically crossed by pressurized fluid. However, the exit or displacement of the gasket results in an undesirable loss of seal of the pipe with leakage of the conveyed fluid to the outside.

Document SU 1204392 discloses a device for forming a bell joint on the pipe end that comprises a hollow forming mandrel connected to a rod and associated with a cone movable along the rod relative to the mandrel and provided with a through groove in which an actuation lever is rotatably inserted. An elastic ring is mounted in an annular seat at the base of the cone and is pushed by the operating lever against an internal wall of the pipe so as to form an annular seat for a gasket. A front end of the cone is insertable into a cavity of the hollow mandrel in an operating configuration.

Document EP 3077177 discloses a forming apparatus for making by hot plastic deformation a bell joint on an end of a plastic pipe comprising mould means for externally enclosing the end of the pipe and a mandrel movable along a longitudinal direction and insertable within the end of the pipe to form the bell joint in cooperation with the mould means. The mandrel includes a plurality of sectors which are expandable transversely and externally towards the mould means in an extended position in order to form on a side wall of the bell joint an annular seat for a sealing gasket. The apparatus further comprises a first compression flange, movable along the longitudinal direction and cooperating with the mould means in order to abut and form the side wall at the annular seat and a second compression flange movable along the longitudinal direction, interposed between the first compression flange and the mandrel and arranged to abut and compress an end front portion of the bell joint so as to press the plastic material against the mould means, the first compression flange and the sectors arranged in the extended position.

Document US 2004/0016100 discloses a method and a device for forming a bell joint on a pipe made of bi-axially oriented thermoplastic material. The pipe has a tubular body and is provided, at one or both ends, with a bell joint. The bi-axially oriented thermoplastic pipe is subjected to a bell joint forming operation comprising the steps of fixing both axial ends of the unheated end part of the pipe, heating the fixed end part to an appropriate bell joint forming temperature in one or more steps and expanding the axially fixed end part with the aid of a fluid pressure inside the end part and/or a vacuum on the external side of the end part, the expansion of which may already start during the heating of the end part.

It is an object of the present invention to improve the known forming apparatuses and methods adapted to make bell joints on pipes made of plastic material.

Another object is to provide a forming apparatus and method which allow to make bell joints on pipes made of plastic material with internal surfaces having a precise and accurate configuration or geometry, in particular at annular seats for sealing gaskets.

A further object is to provide a forming apparatus and method which allow to make bell joints provided with annular seats, in particular with a trapezoidal or rectangular section, for sealing gaskets, in particular of the ring type with a circular section, having small fillets and/or curvature radii.

Another further object is to make a forming apparatus having simple, reliable and economical construction.

In a first aspect of the invention, a forming apparatus according to claim 1 is provided.

In a second aspect of the invention, a forming method according to claim 8 is provided.

The invention can be better understood and implemented with reference to the attached drawings which illustrate an exemplifying and non-limiting embodiment thereof, in which:
- figure 1 is a schematic cross-section of the forming apparatus of the invention associated with a pipe to be formed;
- figures 2 to 4 are schematic cross-sections of the apparatus of figure 1 and of the pipe which illustrate respective subsequent operating steps of the process for forming a bell joint on an end of the pipe;
- figure 5 is a longitudinal section of the pipe provided at one end of the bell joint made by the forming apparatus of the invention;
- figure 6 is a cross section of a variant of the forming apparatus of the invention associated with a pipe to be formed, in an operating step of the process for forming the bell joint on an end of the pipe.

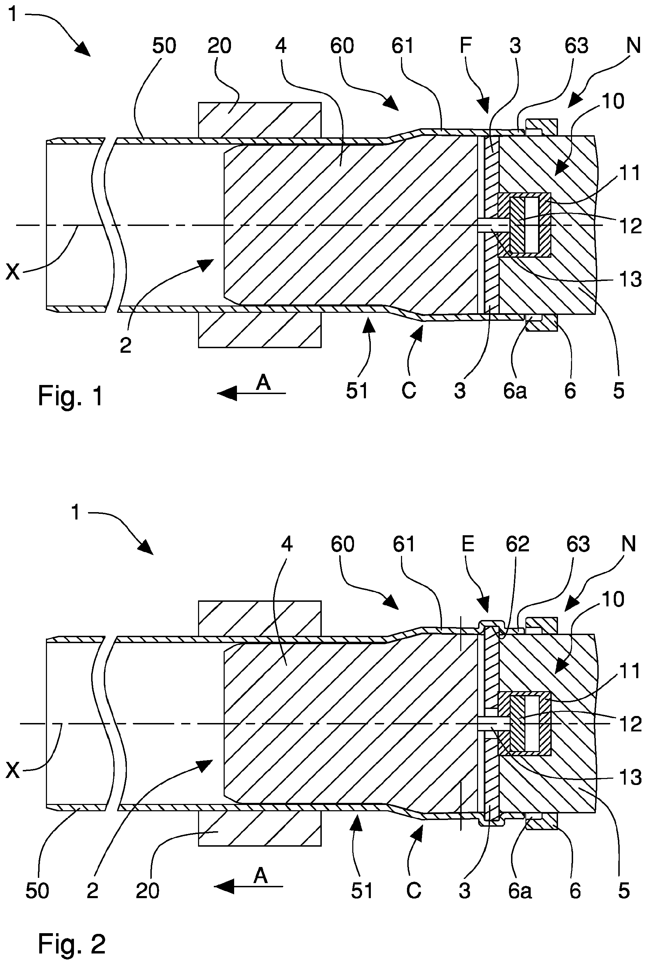

With reference to figures 1 to 4, the forming apparatus 1 according to the invention is illustrated for making, by hot plastic deformation, a bell joint 60 on an end 51 of a pipe 50 made of plastic material, for example polyolefin or PVC.

The forming apparatus 1, or apparatus 1, includes a mandrel 2 movable along a longitudinal direction A and insertable inside the end 51 of the pipe 50 so as to form the bell joint 60. The longitudinal direction A is parallel to an extension longitudinal axis X of the pipe 50.

The mandrel 2 is, for example, a metal expander having the shape of an internal surface of the bell joint 60 and comprises a front or head portion 4 adapted to be inserted inside the end 51 and shaped to form the bell joint 60 and a rear portion 5, connected to first driving means of the mandrel 2, of known type and not illustrated in the figures, configured to move the mandrel 2 along the longitudinal direction A. The mandrel 2 is also provided with a plurality of forming sectors or inserts 3, for example also metallic, that are interposed between the front portion 4 and the rear portion 5, in particular adjacent to and in contact with the latter, and expandable transversely, in particular radially with respect to the longitudinal axis X, and outwards from a retracted position F to an extended position E to form on a side wall 61 of the bell joint 60 an annular seat 62 adapted to receive a sealing gasket.

The forming sectors or sectors 3 are retractable in the retracted position F inside the mandrel 2 between the two front 4 and rear 5 portions to allow to insert or remove the mandrel 2 in/from the pipe 50.

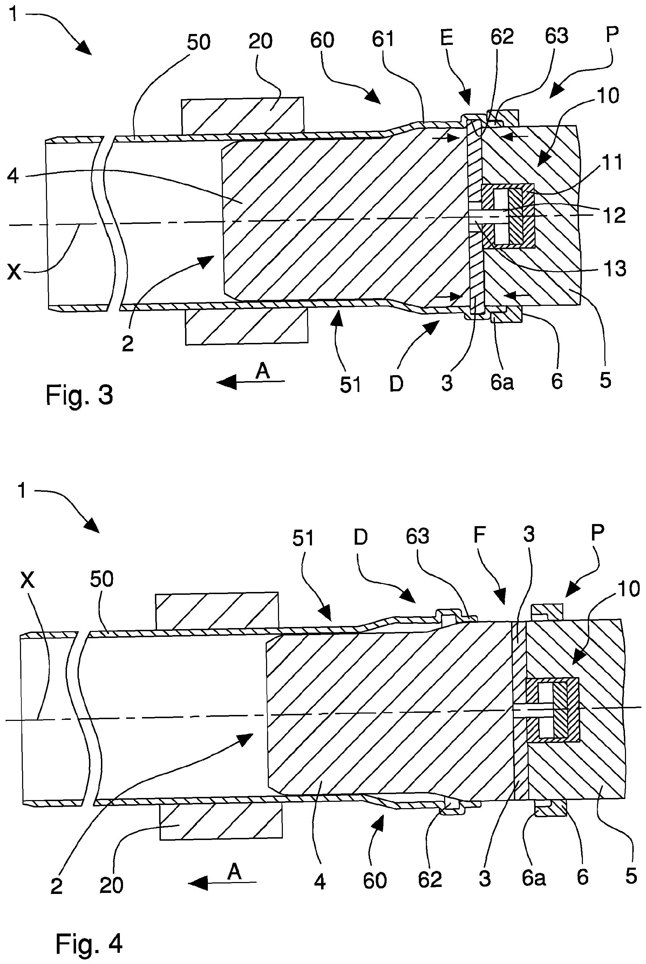

The front portion 4 and the rear portion 5 of the mandrel 2 are movable relative to each other along the longitudinal direction A at least between a first operating configuration C, in which the front portion 4 and the rear portion 5 are mutually spaced apart (fig. 1 and 2), and a second operating configuration D, in which the front portion 4 is adjacent to the rear portion 5 and substantially abuts the sectors 3 (fig. 3 and 4), in particular so as to compress and push the plastic material of the side wall 61 against the sectors 3 arranged in the extended position E to precisely form the annular seat 62, as better explained later in the description.

In the illustrated embodiment, the annular seat 62 has an substantially rectangular section. However, the annular seat can have a section with a different shape, for example square or in the shape of an isosceles trapezoid.

The annular seat 62 substantially consists of an internal annular recess formed by an annular corrugation made by the sectors 3 on the side wall 61 of the bell joint, said annular corrugation also comprising an external annular relief corresponding to the internal annular recess.

The apparatus 1 further comprises a compression flange 6 movable along the longitudinal direction A and cooperating with the sectors 3 to abut and compress an end front portion 63 of the bell joint 60 so as to press the plastic material against the sectors 3, arranged in the extended position E and precisely form the annular seat 62 and the same end front portion 63. In particular, the compression flange 6 is coaxial to the mandrel 2 and slidably mounted on the rear portion 5 of the latter. The compression flange 6 comprises a shaped end 6a adapted to abut the end front portion 63 and form the annular seat 62 in cooperation with the sectors 3.

The compression flange 6 is moved by second driving means, of a known type and not illustrated in the figures, along the longitudinal direction A between a disengagement position N, in which it is more spaced from the sectors 3 and the end front portion 63 of the bell joint 60, and a compression position P, in which said compression flange 6 is closer to the sectors 3 and, in the joint forming step, abuts the end front portion 63, exerting a defined compression force so as to push the plastic material towards the sectors 3.

The apparatus 1 comprises actuator means 10 arranged to move the front portion 4 and the rear portion 5 of the mandrel 2 relative to each other, in particular between the first operating configuration C and the second operating configuration D.

The actuator means 10 comprise a linear actuator inserted, in the illustrated embodiment, inside the rear portion 5 of the mandrel 2 and connected to and acting on the front portion 4 of the mandrel 2.

In particular, the linear actuator 10 comprises a jack for example of the pneumatic or hydraulic type, having a casing 11 housed inside the rear portion 5 and a piston 12 slidable inside the casing 11 and connected by means of a rod 13 to the front portion 4.

Alternatively, in a variant of the forming apparatus 1 not illustrated in the figures, the linear actuator 10 can be inserted inside the front portion 4 and be connected to, and act on, the rear portion 5. In this case, the linear actuator comprises a jack, for example of the pneumatic or hydraulic type, whose casing 11 is housed inside the front portion 4 and a piston 12 sliding inside the casing 11 and connected by means of a rod 13 to the rear portion 5.

The forming apparatus 1 further comprising locking means 20 arranged to abut and block, at least along the longitudinal direction A, the pipe 50 during the forming of the bell joint 60. The locking means 20 comprise, for example, a cylindrical portion made of rubber or similar material and ensure locking and blocking of the pipe 50 during the insertion of the mandrel 2 and during the compression and pressing of the plastic material carried out by the movable front and rear portions 4, 5 of the mandrel 2 and by the compression flange 6, as better explained later in the description.

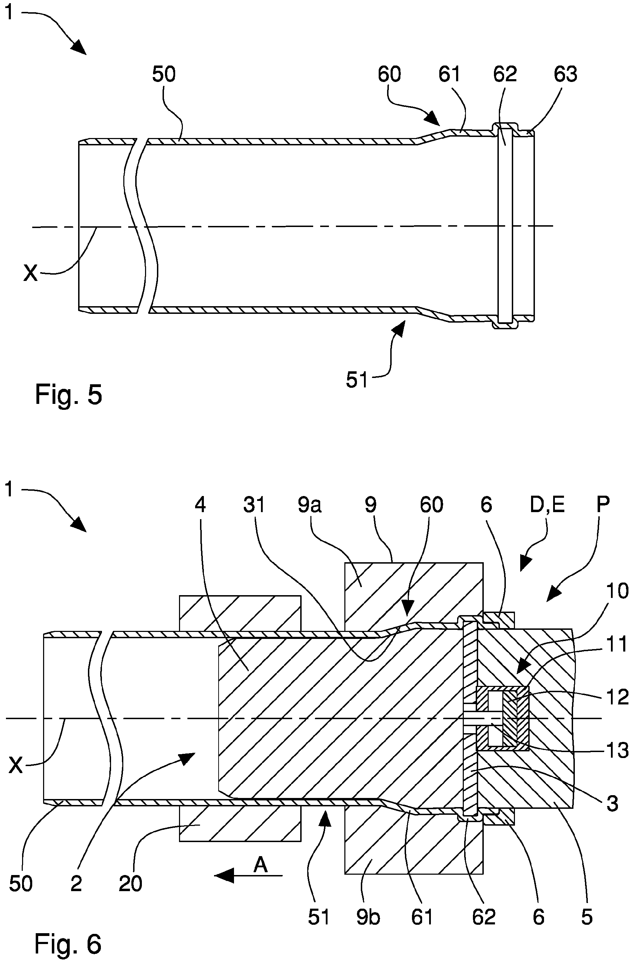

Referring to figure 6, a variant of the forming apparatus 1 of the invention is provided which differs from the embodiment above described and illustrated in figures 1 to 4 only in that it comprises mould means 9 arranged to externally enclose the end 51 of the pipe 50 and provided with a moulding cavity 31 adapted to cooperate with the mandrel 2 to form the bell joint 60.

The compression flange 6 also cooperates with the mould means 9 to abut and form the external surface of the bell joint 61 at the annular seat 62.

The mould means 9 comprise, for example, two half-moulds 9a, 9b movable with respect to one another in opening and closing along a direction transverse, in particular orthogonal, to the longitudinal axis X of the pipe 50. In an open position, the half-moulds 9a, 9b allow the end 51 of the pipe 50 to be formed to be inserted and positioned in the apparatus 1; in a closed position (illustrated in figure 6) the half-moulds 9a, 9b enclose the end 51.

The operation of the apparatus 1 and the relative forming method for making a bell joint 60 on the end 51 of a pipe 50 made of plastic material comprises the steps described below.

In a first operating step (step 1) it is provided to suitably position the end 51 of the pipe 50, for example preheated, in particular by blocking it at least along the longitudinal direction A by means of the locking means 20.

In a second operating step (step 2) the mandrel 2, comprising the front portion 4 and the rear portion 5 mutually spaced apart in a first operating configuration C and the plurality of sectors 3 arranged in the retracted position F, is moved along the longitudinal direction A so as to be inserted inside the end 51 to widen the latter and partially form the bell joint 60.

In a third step (step 3) it is provided to expand the plurality of sectors 3 of the mandrel 2 transversely and externally, in particular radially with reference to the longitudinal axis X of the pipe 50, from the retracted position F to the extended position E so as to form, at least partially, the annular seat 62 on the side wall 61 of the bell joint 60. More precisely, the expanding sectors 3 push the relative side wall portion 61 outwards (figure 2).

In a fourth operating step (step 4) it is provided to move the front portion 4 and the rear portion 5 towards each other along the longitudinal direction A from the first operating configuration C to the second operating configuration D, in which the front portion 4 is adjacent to the rear portion 5 and abuts the sectors 3, to compress and push the plastic material of the side wall 61 against the sectors 3 arranged in the extended position E so as to precisely form the annular seat 62.

Preferably, the rear portion 5 of the mandrel 2 is kept stationary in position, in particular by the first driving means, and the linear actuator 10 is activated, so as to move the front portion 4, by means of the piston 12 and the rod 13, along the longitudinal direction A.

In a fifth operating step (step 5) it is provided to retract the plurality of sectors 3 into the retracted position F and then move the mandrel 2 away and disengaged from the pipe 50 provided with the bell joint 60 along the longitudinal direction A (fig. 4).

The duration of the fourth operating step, during which the annular seat 62 is made by the sectors 3 and by the front portion 4 of the mandrel 2 and by the compression flange 6 (and by the moulded means if provided) is a function of the dimensions of the pipe 50 and annular seat 62, of the thickness of the side wall 61 and of the features of the plastic material with which the pipe 50 is made.

In a sixth operating step (step 6) it is provided to disengage the pipe 50, in particular by unblocking the locking means 20.

In the fourth operating step, during the movement of the front portion 4 and the rear portion 5 towards each other in the second operating configuration D, it is also provided to move the compression flange 6 along the longitudinal direction A to abut and compress the end front portion 63 of the bell joint 60 so as to press the plastic material against the sectors 3, arranged in the extended position E, and to form precisely the annular seat 62 and the end front portion 63.

It should be noted that in the fourth operating step, the plastic material of the side wall 61 is therefore compressed and pushed from both sides of the annular seat 52, i.e., against the opposite sides of the sectors 3, both by the front portion 4 of the mandrel 2, approached to the sectors 3 and the rear portion 5, and by the compression flange 6. More precisely, the plastic material of the side wall 61 adjacent to the annular seat 62 is pressed against the sectors 3, on one side by the front portion 4 and on the other side by the first compression flange 6 so as to completely form the annular seat 62, in particular an annular seat having an internal section, for example of rectangular or trapezoidal shape, provided with sharp edges, i.e., with small curvature radii, which allow to firmly and stably house a sealing gasket during the use of the pipe, typically crossed by a pressurized fluid.

Before the third operating step, and in particular after the second operating step, i.e. before expanding the plurality of sectors 3, it is also provided to enclose and block the end 51 of the pipe 50 by means of mould means 9, if provided in the forming apparatus 1, cooperating with the mandrel 2 to form the bell joint 60. In this case, the plastic material of the side wall 61 adjacent to the annular seat 62 is compressed and pressed by the front portion 4 and the compression flange 6 against the sectors 3 and against the moulding cavity 31 of the mould means 9 so as to completely form the annular seat 62.

Before the positioning inside the apparatus 1, the end 51 of the pipe 50 is in advance heated, in particular to a temperature close to the softening temperature of the plastic material.

Thanks to the apparatus and the method of the invention, it is possible to make bell joints on pipes made of plastic material provided with internal walls or surfaces having a precise and accurate configuration or geometry, in particular at an annular seat for sealing gaskets. More precisely, the forming apparatus and method of the invention allow to make annular seats for sealing gaskets on the bell joints, for example ring gaskets with circular section (O-ring), having very small and precise fillets and/or curvature radii.

The thrust exerted by the front portion 4 of the mandrel 2 and optionally by the compression flange 6 against the sectors 3 during the hot forming process of the bell joint 60 is particularly effective, since the plastic material, compressed and crushed against the sectors 3 of the mandrel 2 and the mould means 9, if provided, by the front portion 4 and by the compression flange 6, optimally adheres to an external surface of the mandrel 2 and to the surfaces of the shaped end 6a of the compression flange 6 and of the moulding cavity 31 of the mould means 9, if provided, substantially filling any internal spaces between the side wall 61 and the sectors 3 and/or mould means 9. In addition, the pressing of the plastic material thus achieved in the compression step prevents a decrease of the thickness of the side wall 61 due to the diametral enlargement or may result in, if desired, an increase in such thickness to increase the structural strength of the bell joint 60.

Tests carried out by the Applicant on pipes made of plastic material of different diameter and thickness have shown that it is possible to make bell joints having a wall thickness which is substantially constant and equal to, or even greater than, the wall thickness of the pipe 50 and to obtain seats for gaskets having particularly small and precise fillets and curvature radii, thus improving seal and functionality of the gaskets. In fact, the seats thus made allow, during the use of the pipe, a correct positioning and housing of the gasket inside the annular seat 62 even at high operating pressures of the fluid conveyed by the pipe.

## Claims

1. Forming apparatus (1) for making a bell joint (60) on an end (51) of a pipe (50) made of plastic material by hot plastic deformation, comprising a mandrel (2) movable along a longitudinal direction (A) and provided with a front portion (4), which can be inserted inside said end (51) and shaped to form said bell joint (60), a rear portion (5) and a plurality of forming sectors (3) interposed between said front portion (4) and said rear portion (5), adjacent to and in contact with the rear portion and transversely and externally expandable from a retracted position (F) to an extended position (E) in order to form an annular seat (62) for a sealing gasket on a side wall (61) of said bell joint (60), said front portion (4) and said rear portion (5) being movable relative to each other along said longitudinal direction (A) between a first operating configuration (C), in which said front portion (4) and said rear portion (5) are mutually spaced apart, and a second operating configuration (D), in which said front portion (4) is adjacent to said rear portion (5) and abuts said forming sectors (3) in order to compress and push the plastic material of said side wall (61) against said forming sectors (3) that are arranged in said extended position (E) so as to precisely form said annular seat (62);
**characterized in that** it further comprises a compression flange (6) movable along said longitudinal direction (A) and cooperating with said forming sectors (3) in order to compress an end front portion (63) of said bell joint (60) and press the plastic material against said forming sectors (3) arranged in said extended position (E) so as to precisely form said annular seat (62) and said end front portion (63).

2. Forming apparatus (1) according to claim 1, wherein said compression flange (6) is coaxial to said mandrel (2) and slidable on said rear portion (5), said compression flange (6) comprising a shaped end (6a) suitable for abutting said end front portion (63) and forming said annular seat (62) in cooperation with said forming sectors (3).

3. Forming apparatus (1) according to claim 1 or 2, comprising actuator means (10) arranged to move said front portion (4) and said rear portion (5) of said mandrel (2) relative to each other at least between said first operating configuration (C) and said second operating configuration (D).

4. Forming apparatus (1) according to claim 3, wherein said actuator means (10) comprise a linear actuator inserted inside said rear portion (5) or in said front portion (4) and connected to, and acting on, said front portion (4) or said rear portion (5).

5. Forming apparatus (1) according to claim 3 or 4, wherein said actuator means (10) include a linear actuator comprising a jack, in particular of pneumatic or hydraulic type, having a casing (11), in particular housed inside said rear portion (5) or said front portion (4), and a piston (12) sliding inside said casing (11) and connected by means of a rod (13) to said front portion (4) or said rear portion (5).

6. Forming apparatus (1) according to any preceding claim, comprising mould means (9) arranged to externally enclose said end (51), in particular said mould means (9) comprising a moulding cavity (31) adapted to cooperate with said mandrel (2) to form said bell joint (60).

7. Forming apparatus (1) according to any preceding claim, comprising locking means (20) arranged to abut and block, at least along said longitudinal direction (A), said pipe (50) during forming of said bell joint (60).

8. Method for making a bell joint (60) on an end (51) of a pipe (50) made of plastic material by hot plastic deformation using a forming apparatus (1) according to any preceding claims, comprising the following steps:
- positioning an end (51) of said pipe (50) on which to make the bell joint (60) and blocking said pipe (50) (step 1);
- moving a mandrel (2), comprising a front portion (4) and a rear portion (5) spaced apart from each other in a first operating configuration (C) and a plurality of forming sectors (3) arranged in a retracted position (F), along a longitudinal direction (A) so as to insert said mandrel (2) inside said end (51) to widen it and partially form said bell joint (60) (step 2);
- expanding said plurality of forming sectors (3) of said mandrel (2) transversely and externally from the retracted position (F) to an extended position (E) to form, at least partially, an annular seat (62) adapted to receive a sealing gasket on a side wall (61) of said bell joint (60) (step 3);
- moving said front portion (4) and said rear portion (5) towards each other along said longitudinal direction (A) from said first operating configuration (C) into a second operating configuration (D), in which said portion front (4) is adjacent to said rear portion (5) and abuts said forming sectors (3), in order to compress and push the plastic material of said side wall (61) against said forming sectors (3) arranged in said extended position (E) so as to precisely form said seat (62) (step 4);
- retracting said forming sectors (3) in said retracted position (F) and moving along said longitudinal direction (A) said mandrel (2) away and disengaged from said pipe (50) provided with said bell joint (60) (step 5);
- disengaging said pipe (50) (step 6);
wherein during said moving said front portion (4) and said rear portion (5) towards each other in said second operating configuration (D) (step 4), it is further provided to move a compression flange (6) along said longitudinal direction (A) in order to abut and compress an end front portion (63) of said bell joint (60) and press the plastic material against said forming sectors (3), arranged in said extended position (E), so as to form precisely said annular seat (62) and said end front portion (63).

9. Method according to claim 8, comprising blocking said pipe (50), at least along said longitudinal direction (A), by means of locking means (20).

10. Method according to claim 8 or 9, comprising, before expanding said plurality of forming sectors (3), enclosing and blocking said end (51) by means of mould means (9) cooperating with said mandrel (2) to form said bell joint (60).

11. Method according to any of claims 8 to 10, comprising, before said positioning said end (51), heating said end, in particular up to a temperature close to the softening temperature of said plastic material.
